Europäisches Patentamt

European Patent Office

Office européen des brevets

(11) Veröffentlichungsnummer: **0 397 296**
**A2**

(12) # EUROPÄISCHE PATENTANMELDUNG

(21) Anmeldenummer: **90250122.0**

(22) Anmeldetag: **10.05.90**

(51) Int. Cl.⁵: **E03F 3/06, F16L 55/165**

(30) Priorität: **11.05.89 DE 3915377**

(43) Veröffentlichungstag der Anmeldung:
**14.11.90 Patentblatt 90/46**

(84) Benannte Vertragsstaaten:
**AT BE CH DE DK ES FR GB IT LI LU NL**

(71) Anmelder: **KLUG GMBH & CO
KANAL-LEITUNGS-UMWELT SANIERUNG
Flagentwiet 17**

**D-2000 Hamburg 61(DE)**

(72) Erfinder: **Spindelmann, Jörg
Mastbrooker Weg 30A
D-2370 Rendsburg(DE)**

(74) Vertreter: **UEXKÜLL & STOLBERG
Patentanwälte
Beselerstrasse 4
D-2000 Hamburg 52(DE)**

(54) Verfahren zum Sanieren von Wasser- oder Abwasserkanälen.

(57) Zum Sanieren von im Boden verlegten, rohrförmigen Wasser-oder Abwasserkanälen (8, 9, 10, 11) werden in zwischen benachbarten Schächten (1, 2, 3) gebildete Haltungen (5, 6) neue Rohrabschnitte (12, 13) in die Kanalbereiche (9, 10) eingebracht. Die Rohrabschnitte (12; 13) werden mit Wasser gefüllt, und in den Freiraum zwischen Kanalbereich (9; 10) und Rohrabschnitt (12; 13) wird Füllmaterial (14; 15) eingepreßt. Hierzu wird der eingebrachte Rohrabschnitt (13) einer Haltung (6) am Eintrittsende gegenüber dem benachbarten Schacht (2) abgedichtet und über eine Leitung (23) mit dem Kanalbereich (9, 12) der vorhergehenden Haltung (5) verbunden. Das Austrittsende des Rohrabschnittes (13) wird unter Abdichtung gegenüber dem benachbarten Schacht (3) mit einer Leitung (24) verbunden, die in den Schacht (3) führt, so daß ihr höchster Überströmpunkt (25) im Schacht (3) oberhalb der Eintrittsöffnung des Rohrabschnittes (13) liegt.

EP 0 397 296 A2

Die Erfindung bezieht sich auf ein Verfahren zum Sanieren von im Boden verlegten, rohrförmigen Wasser- oder Abwasserkanälen durch Einbringen von neuen Rohrabschnitten in die Kanäle in die jeweils zwischen benachbarten Schächten gebildeten Haltungen sowie nachfolgendes Verpressen von Füllmaterial in den Raum zwischen vorhandenem Kanalbereich und eingebrachtem, mit Wasser gefülltem Rohrabschnitt.

Derartige Sanierungsverfahren sind bekannt, und bei ihnen wird üblicherweise so vorgegangen, daß zum Einbringen eines Rohrabschnittes in einen zwischen zwei benachbarten Schächten verlaufenden Kanalbereich die Wasserzufuhr zum in Strömungsrichtung vorderen Schacht unterbrochen bzw. das im Kanal an sich strömende Wasser durch den in Strömungsrichtung vorderen Schacht abgeleitet und an einem in Strömungsrichtung weiter hinten liegenden Schacht wieder zugeführt wird. Der eingebrachte Rohrabschnitt wird dann an beiden Enden abgedichtet, etwa mittels aufblasbarer Dichtkissen, sowie mit Wasser gefüllt, so daß er sicher auf dem Boden des Kanalbereichs ruht, worauf dann ohne die Gefahr des "Aufschwimmens" des Rohrabschnittes in den im Querschnitt sichelförmigen Raum zwischen vorhandenem Kanalbereich und eingebrachtem Rohrabschnitt Füllmaterial eingepreßt wird. Ist dieses ausgehärtet, kann das Wasser aus dem Rohrabschnitt abgelassen werden. Danach werden die Dichtungen entfernt, und das vom Kanal zu führende Wasser kann durch den Bereich der nunmehr sanierten Haltung strömen.

Dieses Verfahren ist verhältnismäßig umständlich und kostenaufwendig, weil entweder zeitweise der Flüssigkeitsstrom durch den Kanal vollständig unterbrochen werden muß oder weil eine aufwendige Umgehung der zu sanierenden Haltung oder Haltungen hergestellt werden muß.

Es ist Aufgabe der Erfindung, eine einfache Möglichkeit zu schaffen, um im wesentlichen während der für das Verpressen des Füllmaterials und dessen Aushärtung benötigten Zeit den Flüssigkeitsstrom durch den Wasser- oder Abwasserkanal aufrechtzuerhalten.

Zur Lösung dieser Aufgabe wird ein Verfahren der eingangs erwähnten Art erfindungsgemäß derart ausgestaltet, daß der eingebrachte Rohrabschnitt einer Haltung am in Strömungsrichtung vorderen Ende gegenüber dem benachbarten Schacht abgedichtet und über eine Leitung mit dem Kanalbereich der vorhergehenden Haltung verbunden wird und daß das Austrittsende des Rohrabschnittes unter Abdichtung gegenüber dem benachbarten Schacht mit einer Leitung verbunden wird, die in den Schacht führt, so daß ihr höchster Überströmpunkt im Schacht oberhalb der Eintrittsöffnung des Rohrabschnittes liegt.

Bei dem erfindungsgemäßen Verfahren wird also nach Einbringen des Rohrabschnittes in den zu sanierenden Kanalbereich eine Abdichtung an beiden Enden des Rohrabschnittes vorgenommen, und das in Strömungsrichtung vordere Ende, also das Eintrittsende des Rohrabschnittes wird mit dem Kanalbereich der vorhergehenden Haltung verbunden, so daß das aus diesem Kanalbereich austretende Wasser in den an beiden Enden abgedichteten Rohrabschnitt gelangt und diesen allmählich füllt. In diesem Zusammenhang sei erwähnt, daß selbstverständlich auch zusätzlich zu dem durch den Kanal fließenden Wasser Wasser in den Rohrabschnitt eingefüllt werden kann, um den Füllvorgang zu beschleunigen. Das Wasser aus dem abgedichteten Rohrabschnitt gelangt dann über die gegenüber dem Schacht abgedichtete Austrittsöffnung des Rohrabschnittes in die sich nach oben in den Schacht erstreckende Leitung, so daß ein Abfließen von Wasser erst dann möglich ist, wenn der Wasserstand den höchsten Überströmpunkt der Leitung erreicht hat, der oberhalb der Eintrittsöffnung des Rohrabschnittes liegt. Dadurch wird sichergestellt, daß auch im Falle des Abfließens von Wasser der Rohrabschnitt immer vollständig mit Wasser gefüllt bleibt und so nicht die Gefahr besteht, daß der Rohrabschnitt beim Einpressen von Füllmaterial in den Raum zwischen ihm und der Wandung des ursprünglichen Kanalbereichs aufschwimmt. Während dieses Verpreßvorganges sowie während der für das Aushärten des Füllmaterials erforderlichen Zeit bleibt der Kanal, auch im Bereich des eingebrachten Rohrabschnittes funktionsfähig, so daß es nicht erforderlich ist, den Wasserabfluß für eine längere Zeit zu unterbrechen oder eine Nebenschlußleitung einzurichten.

In einer Ausgestaltung der Erfindung kann die den höchsten Überströmpunkt bildende Leitung im Schacht in Form einer Windung angeordnet werden, und das Ende der Windung kann in die gegenüber dem Schacht abgedichtete, folgende Haltung geführt werden.

Dadurch wird in der vorstehend beschriebenen Weise sichergestellt, daß der Rohrabschnitt vollständig mit Wasser gefüllt bleibt, jedoch andererseits das Wasser nicht über den höchsten Überströmpunkt der Leitung angestaut wird, während darüber hinaus der die den höchsten Überströmpunkt aufweisende Leitung aufnehmende Schacht trocken bleibt, weil das Wasser über die Leitung direkt in den nachfolgenden Kanalbereich eintritt, der gegenüber dem Schacht abgedichtet ist. Somit können in diesem Schacht ohne Schwierigkeiten Arbeiten durchgeführt werden, und es ist auch möglich, ohne Schwierigkeiten die Lage des Überströmpunktes zu verändern, falls dies erforderlich werden sollte.

Um die gleichzeitige Bearbeitung mehrerer Haltungen zu ermöglichen, kann zumindest die in Strömungsrichtung vor der den Rohrabschnitt aufweisenden Haltung liegende Haltung einen eingebrachten Rohrabschnitt aufweisen und an beiden Enden gegenüber dem jeweiligen Schacht abgedichtet sein, wobei das Austrittsende ihres Rohrabschnittes über eine Leitung mit dem gegenüber dem Schacht abgedichteten Eintrittsende des nachfolgenden Rohrabschnittes und sein Eintrittsende über eine Leitung mit dem gegenüber dem Schacht abgedichteten Austrittsende des vorhergehenden Kanalbereichs oder Rohrabschnittes verbunden ist. In diesem Fall wird die Lage des höchsten Überströmpunktes der sich in dem Schacht hinter der Austrittsöffnung des in Strömungsrichtung letzten Rohrabschnittes erstreckenden Leitung so gewählt, daß er oberhalb des Eintrittsendes des Rohrabschnittes in der in Strömungsrichtung vorderen der miteinander gekoppelten Haltungen liegt.

Auf diese Weise können die Rohrabschnitte in mehreren, aufeinanderfolgenden Haltungen mit Wasser gefüllt werden, um sie beim Verpressen des Füllmaterials nicht aufschwimmen zu lassen, während der Wasserstrom durch den Kanal oder Abwasserkanal nicht unterbrochen wird, jedoch infolge der Lage des höchsten Überstömpunktes sichergestellt wird, daß die eingebrachten Rohrabschnitte aller miteinander gekoppelten Haltungen vollständig mit Wasser gefüllt werden.

Zur Abdichtung können, wie an sich üblich, aufblasbare Dichtkissen verwendet werden, die Kupplungen zum Anschluß von Leitungen aufweisen.

Die Erfindung wird im folgenden anhand der schematisch ein Ausführungsbeispiel zeigenden Figur näher erläutert.

Wie schematisch dargestellt, verläuft im Erdboden ein Abwasserkanal mit Kanalbereichen 8, 9, 10, 11 zwischen durch Schächte 1, 2, 3 begrenzten Haltungen 4, 5, 6, 7, und dieser Kanal erstreckt sich in der Darstellung von links nach rechts abfallend, so daß sich die durch die Pfeile angedeutete Strömungsrichtung ergibt.

In den Kanal sind in den Haltungen 5 und 6 zur Sanierung der Kanalbereiche 9 und 10 Rohrabschnitte 12 und 13, etwa aus Kunststoff eingesetzt, die auf dem Boden der Kanalbereiche 9 und 10 aufliegen, so daß sich im Querschnitt sichelförmige Freiräume zwischen dem jeweiligen Kanalbereich 9, 10 und dem eingesetzten Rohrabschnitt 12, 13 ergeben, die, wie angedeutet, mit einem aushärtbaren Füllmaterial 14, 15 ausgefüllt werden, das in diese Freiräume eingepreßt wird, um nach dem Aushärten einerseits den Raum zwischen Kanalbereich 9, 10 und Rohrabschnitt 12, 13 abzudichten und andererseits den jeweiligen Rohrabschnitt 12, 13 sicher in seiner Lage zu halten.

Um dieses Einbringen des Füllmaterials auf einfache Weise zu ermöglichen, werden, wie in der Darstellung gezeigt, in die Austrittsöffnung des Kanalbereichs 18 ein aufblasbares Dichtkissen 16, in die Eintrittsöffnung und die Austrittsöffnung des Rohrabschnittes 12 aufblasbare Dichtkissen 17 und 18, in die Eintrittsöffnung und die Austrittsöffnung des Rohrabschnittes 13 aufblasbare Dichtkissen 19 und 20 und in die Eintrittsöffnung des Kanalbereiches 11 ein aufblasbares Dichtkissen 21 eingesetzt. Jedes dieser Dichtkissen weist eine leitungsförmige Durchführung auf und legt sich im aufgeblasenen Zustand dichtend an die Innenwand des jeweiligen Kanalbereiches bzw. Rohrabschnittes an. Über schematisch angedeutete Rohrkupplungen wird zwischen den Durchführungen der Dichtkissen 16 und 17 eine sich quer durch die Schacht 1 erstreckende Leitung 22, zwischen den Durchführungen der Dichtkissen 18 und 19 eine sich quer durch den Schacht 2 erstreckende Leitung 23 und zwischen den Durchführungen der Dichtkissen 20 und 21 eine Leitung 24 angeordnet. Die Leitung 24 ist, wie dargestellt, eine Schlaufe bildend gekrümmt und erstreckt sich mit ihrem Mittelbereich nach oben in den Schacht 3, so daß ihr höchster Überströmpunkt 25, d.h. die Stelle, über die Wasser übertritt, um dann in das Ende 27 der Leitung 24 und somit durch die Durchführung des aufblasbaren Dichtkissens 21 zu gelangen, höher liegt, als die Eintrittsöffnung des in Strömungsrichtung am weitesten hinten liegenden Rohrabschnittes 9, wie dies durch die Niveaulinie 26 angedeutet ist.

In dem dargestellten Zustand sind die Kanalbereiche bzw. Rohrabschnitte der Haltungen 4, 5, 6, 7 alle miteinander verbunden, jedoch ihre Eintritts- und Austrittsöffnungen gegenüber dem jeweiligen Schacht abgedichtet. Das in diesem Zustand aus dem Kanalbereich 8 zufließende Wasser gelangt daher durch die Leitungen 22 und 23 in den Rohrabschnitt 13. In diesem staut sich das Wasser, um sich dann auch noch im Rohrabschnitt 12 aufzustauen, bis dieser ebenso gefüllt ist wie der Rohrabschnitt 13 und darüber hinaus noch ein gewisser Stau im Kanalbereich 8 eintritt. Bei Aufstauen des Wassers steigt auch der Wasserstand in der Leitung 24 bis schließlich der höchste Überströmpunkt 25 erreicht ist, worauf jede weitere Wasserzufuhr zu einem Abfließen von Wasser über den Überströmpunkt 25, in das Ende 27 der Leitung 24 und von dort in den Kanalbereich 11 führt, d.h. die Höhe des rückgestauten Wassers kann nicht größer sein als die Höhe der Niveaulinie 26.

Sind die zur Sanierung eingebrachten Rohrabschnitte 12 und 13 in der vorstehend beschriebenen Weise vollständig mit Wasser gefüllt, wird in die Freiräume zwischen Kanalbereich 9, 10 und Rohrabschnitt 12, 13 das Füllmaterial 14, 15 eingepreßt, was beispielsweise von den Schächten 1 und 2 aus erfolgen kann. Dabei hält das Gewicht des in den Rohrabschnitten 12 und 13 befindlichen Wassers die Rohrabschnitte 12 und 13 in ihrer Lage auf dem Boden der Kanalbereiche 9 und 10, so daß nicht die Gefahr des Aufschwimmens besteht.

Ist das Füllmaterial ausgehärtet, können die Dichtkissen 16, 17, 18, 19, 20, 21 belüftet und die Leitungen 22, 23, 24 einschließlich der Dichtkissen entfernt werden.

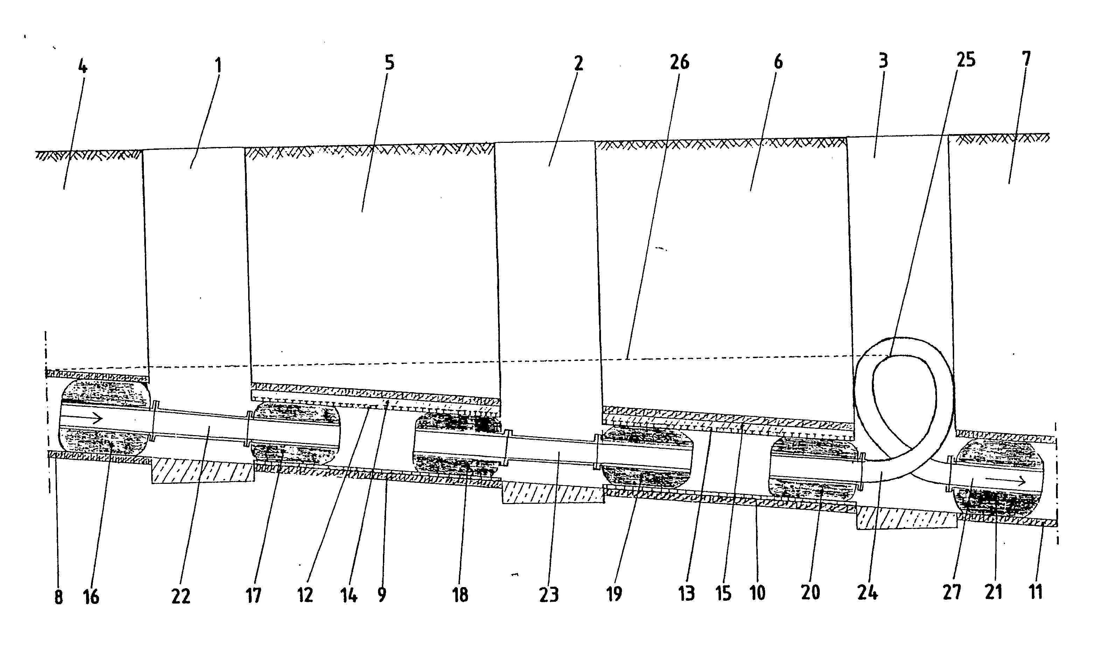

**Ansprüche**

1. Verfahren zum Sanieren von im Boden verlegten, rohrförmigen Wasser- oder Abwasserkanälen (8, 9, 10, 11) durch Einbringen von neuen Rohrabschnitten (12, 13) in die Kanäle (9, 10) in den jeweils zwischen benachbarten Schächten (1, 2, 3) gebildeten Haltungen (5, 6) sowie nachfolgendes Verpressen von Füllmaterial (14, 15) in den Raum zwischen vorhandenem Kanalbereich (9; 10) und eingebrachtem, mit Wasser gefülltem Rohrabschnitt (12; 13), dadurch gekennzeichnet, daß der eingebrachte Rohrabschnitt (13) einer Haltung (6) am in Strömungsrichtung vorderen Ende gegenüber dem benachbarten Schacht (2) abgedichtet und über eine Leitung (23) mit dem Kanalbereich (9, 12) der vorhergehenden Haltung (5) verbunden wird und daß das Austrittsende des Rohrabschnittes (13) unter Abdichtung gegenüber dem benachbarten Schacht (3) mit einer Leitung (24) verbunden wird, die in den Schacht (3) führt, so daß ihr höchster Überströmpunkt (25) im Schacht (3) oberhalb der Eintrittsöffnung des Rohrabschnittes (13) liegt.

2. Verfahren nach Anspruch 1, dadurch gekennzeichnet, daß die den höchsten Überströmpunkt (25) bildende Leitung (24) im Schacht (3) in Form einer Windung angeordnet wird und das Ende (27) der Windung (24) in die gegenüber dem Schacht (3) abgedichtete, folgende Haltung (7) geführt wird.

3. Verfahren nach Anspruch 1 oder 2, dadurch gekennzeichnet, daß zumindest die in Strömungsrichtung vor der den Rohrabschnitt (13) aufweisenden Haltung (6) liegende Haltung (5) einen eingebrachten Rohrabschnitt (12) aufweist und an beiden Enden gegenüber dem jeweiligen Schacht (1, 2) abgedichtet ist, wobei das Austrittsende ihres Rohrabschnittes (12) über eine Leitung (23) mit dem gegenüber dem Schacht (2) abgedichteten Eintrittsende des nachfolgenden Rohrabschnittes (13) und sein Eintrittsende über eine Leitung (22) mit dem gegenüber dem Schacht (1) abgedichteten Austrittsende des vorhergehenden Kanalbereichs (8) oder Rohrabschnittes verbunden ist, und daß der höchste Überströmpunkt (25) im Schacht (3) oberhalb des Eintrittsendes des eingebrachten Rohrabschnittes (12) der in Strömungsrichtung vorderen der mit miteinander gekoppelten Haltungen (5, 6) liegt.

4. Verfahren nach Anspruch 3, dadurch gekennzeichnet, daß die Austrittsöffnung der in Strömungsrichtung vor den gekoppelten Haltungen (5, 6) liegende Haltung (4) gegenüber dem zwischen ihr und der benachbarten, gekoppelten Haltung (5) liegenden Schacht (1) abgedichtet und über eine Leitung (22) mit dem Rohrabschnitt (12) dieser Haltung (5) verbunden ist.

5. Verfahren nach einem der Ansprüche 1 bis 4, dadurch gekennzeichnet, daß zur Abdichtung aufblasbare Dichtkissen (16, 17, 18, 19, 20) verwendet werden, die Kupplungen zum Anschluß von Leitungen (22, 23, 24) aufweisen.

EP 0 397 296 A2